# EUROPEAN PATENT APPLICATION

(11) **EP 4 628 850 A1**
(43) Date of publication of application: **08.10.2025**
(21) Application number: 23897317.6
(22) Date of filing: 24.10.2023
(51) Int. Cl.: G01D 5/20

(54) **POSITION DETECTION DEVICE**

(30) Priority: 02.12.2022 JP 2022193691
(71) Applicant: DENSO CORPORATION, Kariya-city, Aichi 448-8661 (JP)
(72) Inventor: KONO, Tsukasa, Kariya-city, Aichi 448-8661 (JP); KOBAYASHI, Atsushi, Kariya-city, Aichi 448-8661 (JP); MURAYAMA, Ryosuke, Kariya-city, Aichi 448-8661 (JP)
(74) Representative: Kuhnen & Wacker Patent- und Rechtsanwaltsbüro PartG mbB
(86) International application number: PCT/JP2023/038359
(87) International publication number: WO 2024/116660

(57) **Abstract**

A position detection device for detecting a position of a displaceable detection object (10) includes a substrate (20), a transmitter coil (30) and a receiver coil (40). The substrate (20) is disposed facing the detection object (10). The transmitter coil (30) extends in a plane direction of the substrate (20). The receiver coil (40) in which wiring is formed in a spiral shape and aligned in a direction of displacement of the detection object (10) includes a plurality of spiral portions which are inductively coupled by electromagnetic induction caused by current passing through the transmitter coil (30), a connecting wire (42) which electrically connect the plurality of spiral portions (41) to each other, and a parallel wire (43) which is electrically connected to the spiral portions (41) and the connecting wire (42) and extends parallel to the connecting wire (42).

## Description

### CROSS REFERENCE TO RELATED APPLICATIONS

The present application is based on Japanese Patent Application No. 2022-193691 filed on December 2, 2022, the description of which is incorporated herein by reference.

### TECHNICAL FIELD

The present disclosure relates to a position detection device.

### BACKGROUND

In the related art, a position detection device for detecting a position of a detection object has been proposed. For example, the position detection device described in Patent Document 1 includes a transmitter coil and a receiver coil mounted on a substrate, and a target disposed facing the substrate. The receiver coil has a plurality of spiral portions in which wiring is formed in a spiral shape, and connecting wires that electrically connect the plurality of spiral portions to each other. This position detection device applies an alternating current to a transmitter coil and detects the position of the target based on a characteristic value (for example, an output voltage) of a receiver coil that changes in accordance with an amount of displacement of the target.

### PRIOR ART DOCUMENT

### PATENT DOCUMENT

Patent Document 1: US 2022/0011138A1

### SUMMARY OF INVENTION

However, in the position detection device described in Patent Document 1, when an alternating current is applied to the transmitter coil, an induced current is generated in the spiral portion and the connecting wire at a portion of the receiver coil that corresponds to an opening of the target. The inventors of the present disclosure have discovered that an induced current generated in the connecting wire causes an offset in the output voltage of the receiver coil, which varies in accordance with the amount of displacement of the detection object. When the offset value of the output voltage of the receiver coil falls outside a signal adjustment range of the signal processing unit (eg, IC), there is a problem that the accuracy of position detection deteriorates. The offset refers to a deviation of the average value of the output voltage waveform, which changes in response to the amount of displacement of the detection object, from an ideal waveform to the plus or minus side.

The present disclosure aims to improve the detection accuracy of the position detection device.

According to one aspect of the present disclosure, a position detection device for detecting the position of a displaceable detection object includes a substrate disposed facing the detection object, a transmitter coil extending in a surface direction of the substrate, and a receiver coil having wiring formed in a spiral shape and aligned in the displacement direction of the detection object. The receiver coil has a plurality of spiral portions inductively coupled by electromagnetic induction caused by energization of the transmitter coil, a connecting wire electrically connecting the plurality of spiral portions, and a parallel wire electrically connected to the spiral portions and the connecting wire and extending parallel to the connecting wire.

According to this configuration, when an alternating current is applied to the transmitter coil, at least a part of the magnetic field generated by the current flowing through the connecting wire and at least a part of the magnetic field generated by the current flowing through the parallel wire cancel each other out. This prevents the waveform of the characteristic value (eg, output voltage) of the receiver coil, which changes in response to the amount of displacement of the detection object, from being offset from an ideal waveform. Therefore, this position detection device can prevent a characteristic value of the receiver coil from going outside an adjustment range of a signal processing unit, thereby improving detection accuracy.

In addition, when at least a part of the magnetic field generated by the current flowing in the connecting wire and at least a part of the magnetic field generated by the current flowing in the parallel wire cancel each other out, this may mean that the entire magnetic field is canceled out, or that only a portion of the magnetic field is canceled out.

In addition, since this position detection device has a receiver coil having a plurality of spiral portions, it is possible to increase a wiring occupancy rate of the receiver coil per unit area of the substrate (hereinafter referred to as a "space factor"). Therefore, this position detection device can increase the amplitude of the output voltage of the receiver coil, thereby improving detection accuracy.

A reference numeral in parentheses attached to each configuration element or the like indicates an example of correspondence between the configuration element or the like and the specific configuration element or the like described in embodiments below.

### BRIEF DESCRIPTION OF DRAWINGS

FIG. 1 is a plan view showing a position detection device according to a first embodiment;
FIG. 2 is a cross-sectional view taken along a line II-II of FIG. 1;
FIG. 3 is a perspective view showing a first receiver coil of the first embodiment;
FIG. 4 is a perspective view showing a second receiver coil of the first embodiment;
FIG. 5A is a diagram showing a portion of a first receiver coil mounted on a first layer of a multilayer substrate;
FIG. 5B is a diagram showing a portion of the first receiver coil mounted on a second layer of the multilayer substrate;
FIG. 5C is a diagram showing a portion of the first receiver coil mounted on a third layer of the multilayer substrate;
FIG. 6A is a diagram showing a portion of a second receiver coil mounted on a first layer of a multilayer substrate;
FIG. 6B is a diagram showing a portion of the second receiver coil mounted on a second layer of the multilayer substrate;
FIG. 6C is a diagram showing a portion of the second receiver coil mounted on a third layer of the multilayer substrate;
FIG. 7 is a graph showing an output voltage of the first receiver coil and an output voltage of the second receiver coil;
FIG. 8 is a block diagram showing a position detection device according to the first embodiment;
FIG. 9 is a graph comparing an amplitude of the output voltage of the first receiver coil provided in the position detection device according to the first embodiment with an amplitude of the output voltage of the first receiver coil provided in the position detection device of the first comparative example (i.e., one that does not have a spiral portion);
FIG. 10 is a graph comparing the output voltage of the first receiver coil provided in the position detection device according to the first embodiment with the output voltage of the first receiver coil provided in the position detection device according to the second comparative example (i.e., one that does not have a parallel line);
FIG. 11 is a plan view showing a position detection device according to a second embodiment;
FIG. 12 is a perspective view showing a first receiver coil according to the second embodiment;
FIG. 13 is a perspective view showing a second receiver coil according to the second embodiment;
FIG. 14 is a plan view showing a position detection device of a first comparative example;
FIG. 15 is a perspective view showing a first receiver coil of a second comparative example; and
FIG. 16 is a perspective view showing a second receiver coil of the second comparative example.

### DETAILED DESCRIPTION

Hereinafter, embodiments of the present disclosure will be described with reference to the drawings. In the following embodiments and comparative examples, parts that are the same or equivalent to each other are given the same reference numerals and descriptions thereof are omitted. In addition, the arrows indicating one side and the other side shown in each drawing are depicted for the convenience of explanation, and the one side and the other side may be interchanged.

### First Embodiment:

A first embodiment will be described with reference to the drawings.

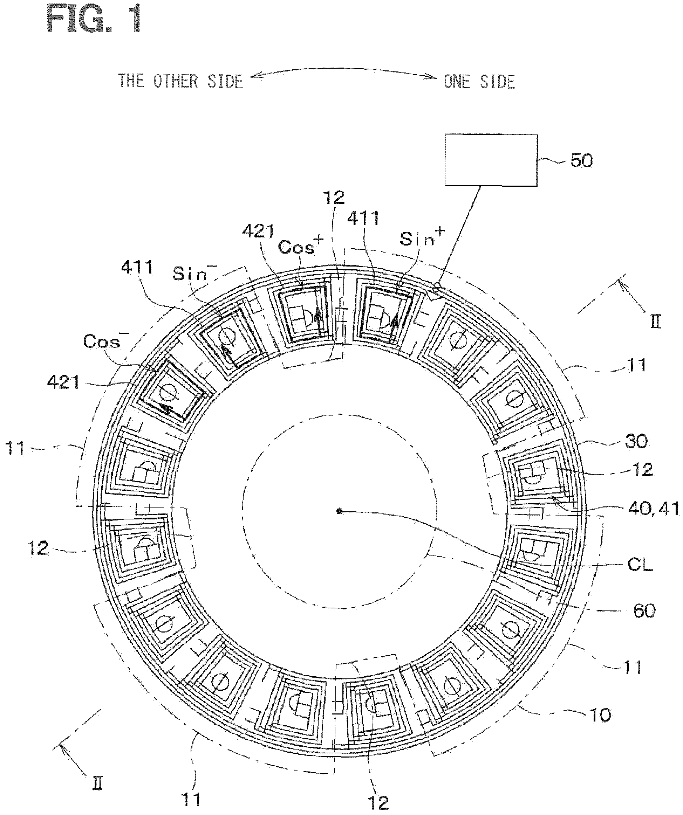

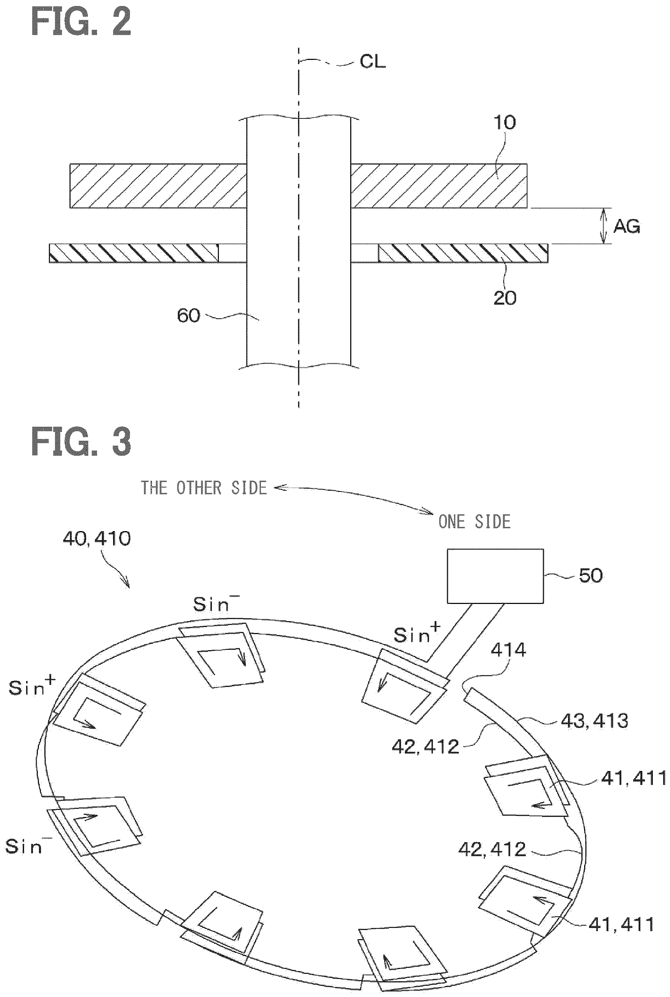

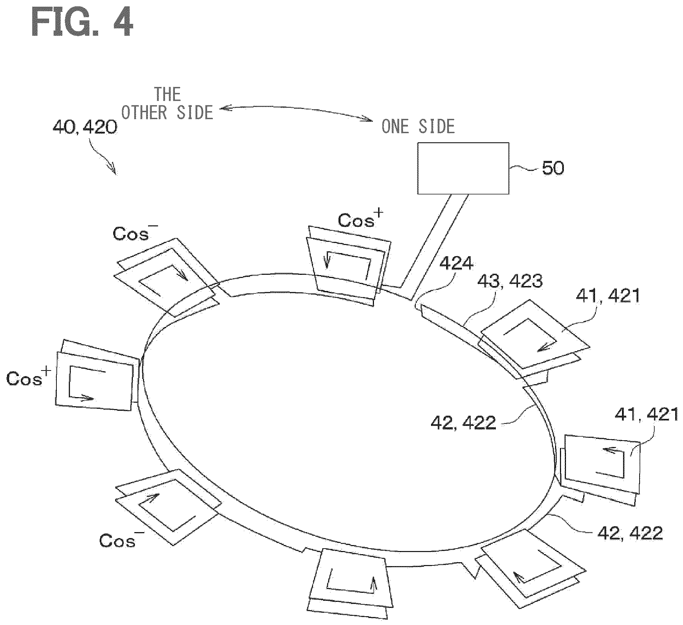

As shown in FIGS. 1 and 2, the position detection device is an inductive sensor that includes a substrate 20, a transmitter coil 30, a receiver coil 40, and a signal processing unit 50, and detects the position of a target 10 as a detection object. In FIG. 1, wirings arranged on a plurality of layers of the substrate 20 are shown overlapping each other. Moreover, as shown in FIGS. 3 to 6C, in the present embodiment, an example will be described in which wiring constituting the receiver coil 40 and the like is respectively provided on three layers of the substrate 20.

As shown in FIG. 2, the target 10 is made of a conductor such as a metal, and is fixed to a rotating shaft 60. The target 10 undergoes rotational displacement together with the rotating shaft 60 around an axis CL of the rotating shaft 60. The target 10 may be one that undergoes rotational displacement of 360 degrees or more, or may be one that undergoes rotational displacement within a range of 360 degrees or less. In the following description, a direction in which the axis CL of the rotating shaft 60 extends is referred to as an "axial direction", a radial direction of an imaginary circle perpendicular to the axis CL of the rotating shaft 60 is referred to as a "radial direction", and a circumferential direction of the imaginary circle is referred to as a "circumferential direction".

In FIG. 1, the outer edges of the target 10 and the rotating shaft 60 are indicated by dashed lines. The target 10 is formed in a substantially circular ring shape. The target 10 has one or more (for example, four) teeth 11 in the circumferential direction and one or more (for example, four) openings 12 formed between the teeth 11. The teeth 11 and the openings 12 are aligned in the displacement direction of the target 10 (i.e., the circumferential direction). The shape and size of the teeth 11 and the openings 12 of the target 10 are not limited to those configurations shown in FIG. 1, and are set appropriately depending on, for example, the magnitude of the output voltage of the receiver coil 40 required for signal processing by the signal processing unit 50.

As shown in FIG. 2, the substrate 20 is, for example, a multilayer substrate, and is disposed facing the target 10. A predetermined gap AG is provided between the substrate 20 and the target 10. The substrate 20 is fixed to a fixed body (not shown) (for example, a vehicle body or a member fixed to the vehicle body). Therefore, the rotating shaft 60 and the target 10 rotate relative to the substrate 20.

As shown in FIG. 1, the transmitter coil 30 is provided on an arbitrary layer of the substrate 20 and extends in a surface direction of the substrate 20. In the present embodiment, the transmitter coil 30 is wound multiple times so as to surround the radial outside of the receiver coil 40. One end and the other end of the wiring of the transmitter coil 30 are each connected to the signal processing unit 50.

As shown in FIGS. 3 to 6C, the receiver coil 40 has a plurality of spiral portions 41, connecting wires 42, parallel wires 43, and the like. The plurality of spiral portions 41 are portions where the wiring is formed in a spiral shape. The plurality of spiral portions 41 are disposed at positions where they are inductively coupled by electromagnetic induction caused by energization of the transmitter coil 30. The plurality of spiral portions 41 are aligned in a displacement direction of the target 10. The direction in which the plurality of spiral portions 41 are arranged is substantially the same as the direction in which the transmitter coil 30 extends. Therefore, the plurality of spiral portions 41 are lined up in the direction in which the transmitter coil 30 extends. Further, the plurality of spiral portions 41 are disposed radially inside the transmitter coil 30 which is wound in an annular shape. The wiring constituting the plurality of spiral portions 41 is preferably arranged with the maximum space factor while ensuring the clearance required for insulation.

The connecting wire 42 is a portion that electrically connects the plurality of spiral portions 41 to each other. Therefore, the connecting wires 42 are provided at multiple locations between the plurality of spiral portions 41.

The parallel wire 43 is electrically connected to the spiral portion 41 and the connecting wire 42, and is disposed alongside the connecting wire 42. The parallel wires 43 are disposed alongside at least some or all of the connecting wires 42 at a plurality of locations.

In the present embodiment, the receiver coil 40 includes a first receiver coil 410 and a second receiver coil 420.

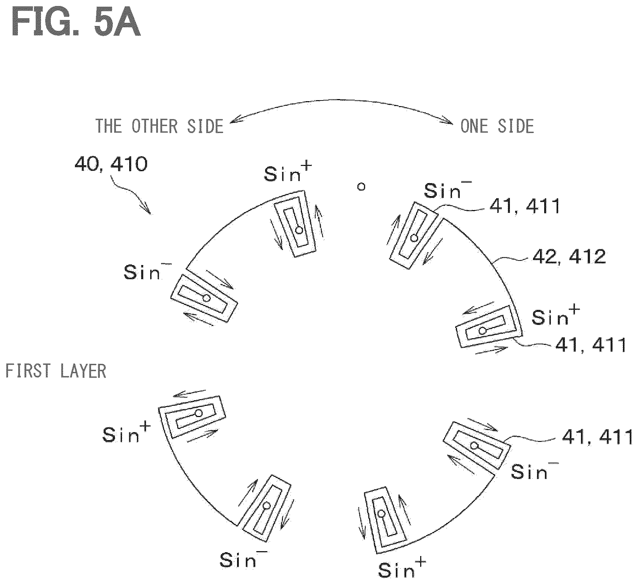

As shown in FIGS. 1, 3, and 5A to 5C, the first receiver coil 410 has a plurality of first spiral portions 411, first connecting wires 412, first parallel wires 413, and the like. In addition, circles in FIGS. 5A to 5C present vias. That is, the plurality of first spiral portions 411, the first connecting wire 412, the first parallel wire 413, and the like that constitute the first receiver coil 410 are electrically connected in one continuous line through vias.

Hereinafter, for ease of explanation, as shown in FIG. 1 etc., of the two first spiral portions arranged to sandwich a given second spiral portion 421 (for example, a Cos+ coil), one of the first spiral portions 411 may be referred to as a Sin+ coil, and the other of the first spiral portions 411 may be referred to as a Sin-coil.

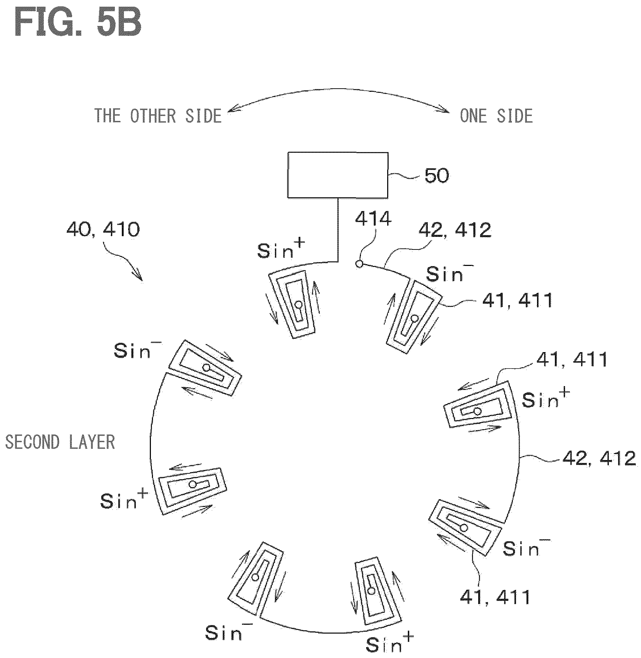

In FIGS. 5A and 5B, the arrows drawn on the outside of each first spiral portion 411 indicate the direction in which current flows through the wiring of each first spiral portion 411 at a given instantaneous value of the alternating current applied to the transmitter coil 30. As shown in FIGS. 5A and 5B, at a given instantaneous value of the alternating current, current flows counterclockwise in one of the first spiral portion 411 (e.g., the Sin+ coil), and current flows clockwise in the other of the first spiral portion 411 (e.g., the Sin-coil).

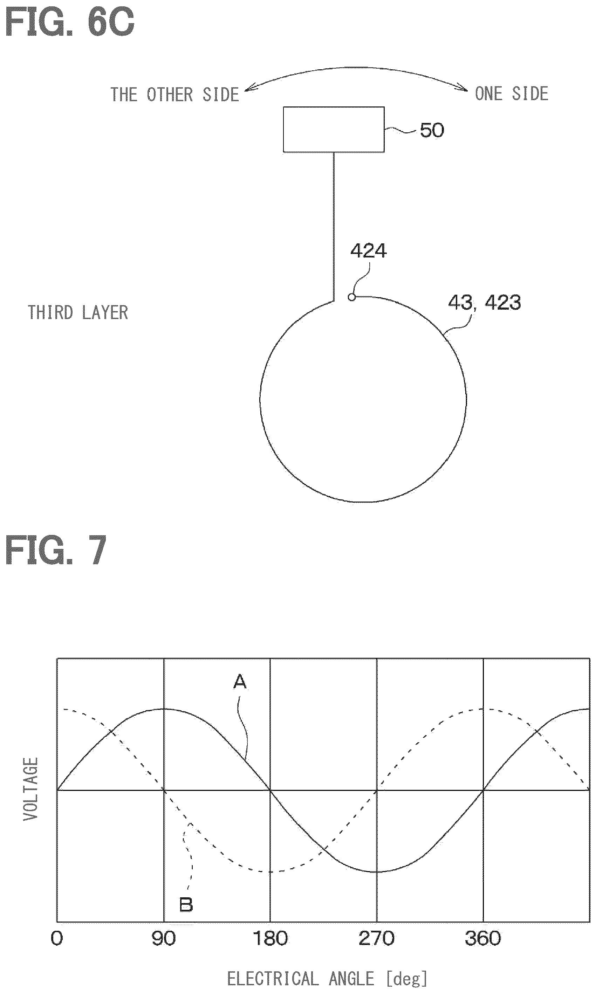

As indicated by the solid line A in FIG. 7, the first receiver coil 410 is a receiver coil 40 that outputs a sinusoidal signal in response to the displacement of the target 10. The first receiver coil 410 outputs a voltage value according to the magnitude of the induced current generated from the Sin+ coil and the Sin-coil located at a position corresponding to the opening 12 of the target 10. A distance between the center of the Sin+ coil and the center of the Sin- coil is set so that the phases of the waveforms of the output voltages corresponding to the displacement of the target 10 differ by 180 degrees in electrical angle.

As shown in FIGS. 5A and 5B, the first connecting wire 412 electrically connects the plurality of first spiral portions 411 to each other. In the present embodiment, each of the first connecting wires 412 connects radially outer portions of the plurality of first spiral portions 411 to each other.

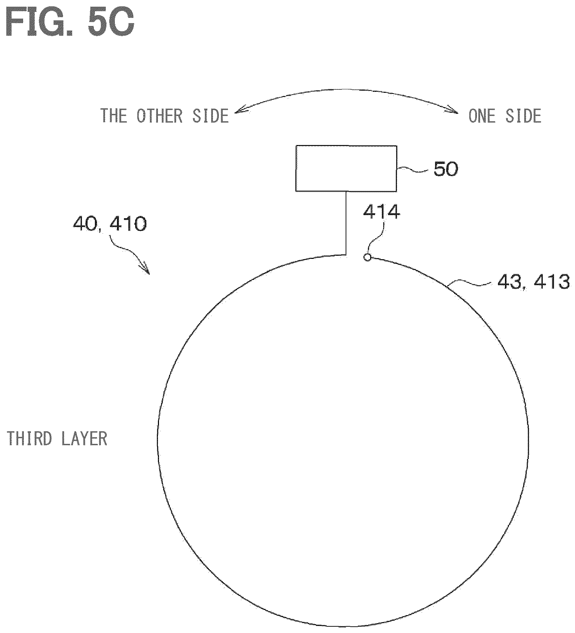

As shown in FIG. 5C, the first parallel wire 413 is electrically connected to the plurality of first spiral portions 411 and the first connecting wire 412 and extends along the first connecting wire 412. The first parallel wire 413 is provided in a layer different from that of the first connecting wire 412 at positions overlapping in the thickness direction of the substrate 20. Therefore, in the present embodiment, the first parallel wire 413 is provided at a position radially outside the plurality of first spiral portions 411.

The first connecting wire 412 and the first parallel wire 413 are electrically connected via a first folded portion 414. In the present embodiment, the first folded portion 414 is configured by a via that electrically connects the first connecting wire 412 and the first parallel wire 413 that are provided on two different layers of the substrate 20. The first connecting wire 412 and the first parallel wire 413 are arranged so as to fold back through the via as the first folded portion 414 in two different layers of the substrate 20. Therefore, the first connecting wire 412 and the first parallel wire 413 are arranged such that, at a given instantaneous value of the alternating current applied to the transmitter coil 30, the direction of the current flowing through a given portion of the first connecting wire 412 is opposite to the direction of the current flowing through a given portion of the first parallel wire 413 adjacent to that portion.

As described above, the first connecting wire 412 and the first parallel wire 413 are provided in two different layers of the substrate 20 at positions where they overlap in the thickness direction of the substrate 20. Therefore, the first connecting wire 412 and the first parallel wire 413 are arranged adjacent to each other. Specifically, adjacent arrangement means that the first connecting wire 412 and the first parallel wire 413 are arranged at a distance such that at least a part of the magnetic field generated by the current flowing in the first connecting wire 412 due to the alternating current applied to the transmitter coil 30 and at least a part of the magnetic field generated by the current flowing in the first parallel wire 413 cancel each other out.

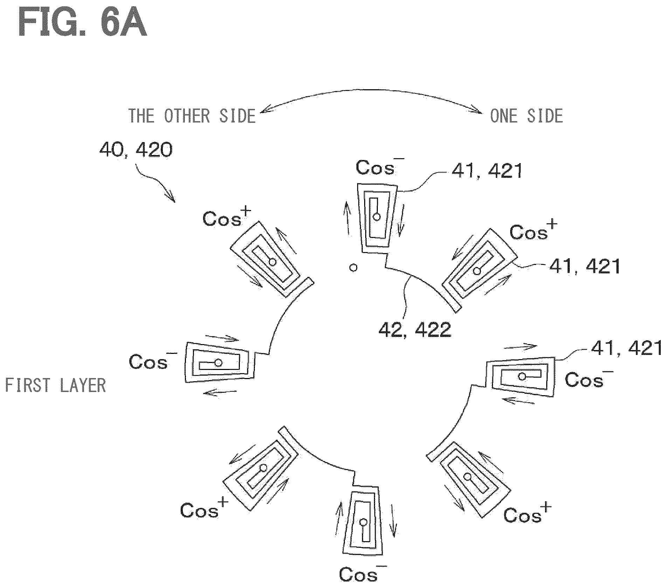

As shown in FIGS. 1, 4, and 6A to 6C, the second receiver coil 420 has a plurality of second spiral portions 421, second connecting wires 422, second parallel wires 423, and the like. In addition, circles in FIGS. 6A to 6C also present vias. That is, the plurality of second spiral portions 421, the second connecting wire 422, the second parallel wire 423, and the like that constitute the second receiver coil 420 are electrically connected in one continuous line through vias.

Hereinafter, for ease of explanation, as shown in FIG. 1 etc., of the two second spiral portions 421 arranged to sandwich a given first spiral portion 411 (for example, a Sin- coil), one of the second spiral portions 421 may be referred to as a Cos+ coil, and the other of the second spiral portions 421 may be referred to as a Cos- coil.

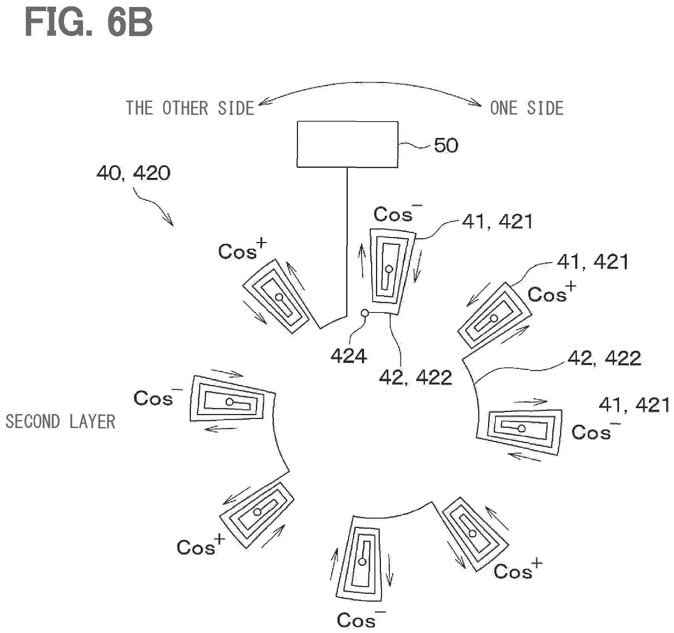

In FIGS. 6A and 6B, the arrows drawn on the outside of each second spiral portion 421 indicate the direction in which current flows through the wiring of each second spiral portion 421 at different instantaneous values of the alternating current applied to the transmitter coil 30. As shown in FIGS. 6A and 6B, at a different instantaneous value of the alternating current, current flows counterclockwise in one of the second spiral portion 421 (e.g., the Cos+ coil) and current flows clockwise in the other of the second spiral portion 421 (e.g., the Cos- coil).

As indicated by the dashed line B in FIG. 7, the second receiver coil 420 is the receiver coil 40 that outputs a sinusoidal voltage signal that is out of phase with the waveform of the voltage signal of the first receiver coil 410 in response to the displacement of the target 10. The waveform of the output voltage of the first receiver coil 410 and the waveform of the output voltage of the second receiver coil 420 differ from each other by an electrical angle of 90 degrees. Therefore, the waveform of the output voltage of the second receiver coil 420 can also be said to be cosine wave-like. The second receiver coil 420 outputs a voltage value according to the magnitude of the induced current generated from the Cos+ coil and the Cos- coil located at a position corresponding to the opening 12 of the target 10.

The distance between the center of the Cos+ coil and the center of the Cos- coil is set so that the phases of the waveforms of the output voltages corresponding to the amount of displacement of the target 10 differ by 180 degrees in electrical angle. In addition, the distance between the center of the Sin+ coil and the center of the Cos+ coil is set so that the phases of the waveforms of the output voltages corresponding to the displacement of the target 10 differ by 90 degrees in electrical angle. The distance between the center of the sine coil and the center of the cosine coil is set so that the phases of the waveforms of the output voltages corresponding to the displacement of the target 10 differ by 90 degrees in electrical angle.

As shown in FIGS. 6A and 6B, the second connecting wire 422 electrically connects the plurality of second spiral portions 421 to each other. In the present embodiment, each of the second connecting wires 422 connects radially inner portions of the plurality of second spiral portions 421 to each other.

As shown in FIG. 6C, the second parallel wire 423 is electrically connected to the plurality of second spiral portions 421 and the second connecting wire 422 and extends along the second connecting wire 422. The second parallel wire 423 is provided in a layer different from that of the second connecting wire 422 at positions overlapping in the thickness direction of the substrate 20. Therefore, in the present embodiment, the second parallel wire 423 is provided at a position radially outside the plurality of second spiral portions 421.

The second connecting wire 422 and the second parallel wire 423 are electrically connected via a second folded portion 424. In the present embodiment, the second folded portion 424 is configured by a via that electrically connects the second connecting wire 422 and the second parallel wire 423 that are provided on two different layers of the substrate 20. The second connecting wire 422 and the second parallel wire 423 are arranged so as to fold back through a via as the second folded portion 424 in two different layers of the substrate 20. Therefore, the second connecting wire 422 and the second parallel wire 423 are arranged such that, at a given instantaneous value of the alternating current applied to the transmitter coil 30, the direction of the current flowing through a given portion of the second connecting wire 422 is opposite to the direction of the current flowing through a given portion of the second parallel wire 423 adjacent to that portion.

As described above, the second connecting wire 422 and the second parallel wire 423 are provided in two different layers of the substrate 20 at positions where they overlap in the thickness direction of the substrate 20. Therefore, the second connecting wire 422 and the second parallel wire 423 are arranged adjacent to each other. Specifically, adjacent arrangement means that the second connecting wire 422 and the second parallel wire 423 are arranged at a distance such that at least a part of the magnetic field generated by the current flowing in the second connecting wire 422 due to the alternating current applied to the transmitter coil 30 and at least a part of the magnetic field generated by the current flowing in the second parallel wire 423 cancel each other out.

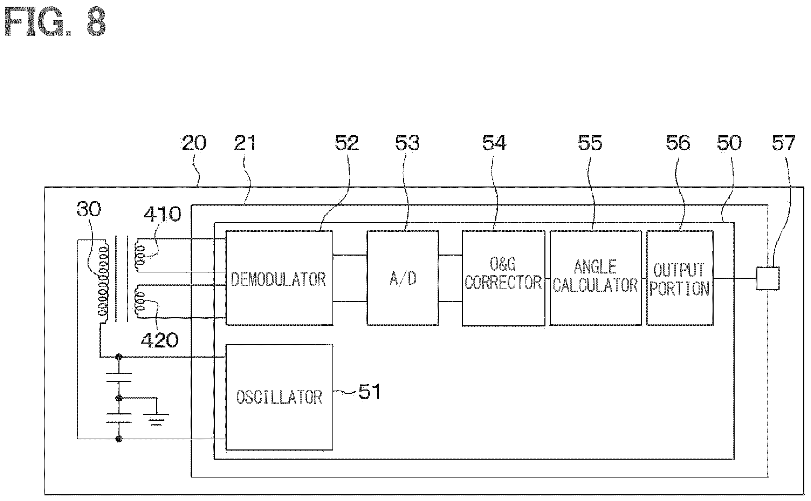

As shown in FIG. 8, the substrate 20 is provided with an electronic control circuit 21 including a microcomputer having a processor and a memory. The electronic control circuit 21 executes various control operations by having the processor read and execute programs from the memory. In addition, various data to be used when executing the program is stored in advance in the memory.

Specifically, the electronic control circuit 21 includes a signal processing unit 50 that is connected to the transmitter coil 30, the first receiver coil 410, and the second receiver coil 420 and performs predetermined processing. The signal processing unit 50 includes, for example, an oscillator 51, a demodulator 52, an AD converter 53, an offset and gain corrector 54, an angle calculator 55, and an output portion 56, and is configured as an integrated circuit (IC). In the following, a typical example will be described in which the signal is converted into a digital signal for processing. Meanwhile, in the case of processing with an analog signal, the signal processing unit 50 does not need to include the AD converter 53 and the like.

The oscillator 51 is electrically connected to the transmitter coil 30 and applies an alternating current of a predetermined frequency to the transmitter coil 30. At that time, an induced current flows in the first receiver coil 410 and the second receiver coil 420 due to the magnetic field generated by the transmitter coil 30.

The demodulator 52 is connected to each of the first receiver coil 410 and the second receiver coil 420. The demodulator 52 generates a first demodulated signal by demodulating the first voltage value V1 output from the first receiver coil 410, and generates a second demodulated signal by demodulating the second voltage value V2 output from the second receiver coil 420.

The AD converter 53 generates a first converted signal by AD converting the first demodulated signal, and generates a second converted signal by AD converting the second demodulated signal.

The offset and gain corrector 54 performs offset correction and gain correction on the first converted signal and the second converted signal. Generally, the signal processing unit 50 (for example, an IC) has a predetermined adjustment range specification in which the offset correction and gain correction can be performed. In other words, the signal processing unit 50 is designed such that it cannot accurately perform the offset correction and gain correction when the first voltage value V1 and the second voltage value V2 fall outside the adjustment range specification.

The angle calculator 55 calculates the position (i.e., mechanical angle) of the target 10 by, for example, calculating an arctangent function based on the signals obtained by performing the offset correction and gain correction on the first converted signal and the second converted signal. The output portion outputs the mechanical angle of the target 10 calculated by the angle calculator 55 to an output terminal 57.

Next, the first voltage value V1 of the first receiver coil 410 and the second voltage value V2 of the second receiver coil 420 when the target 10 undergoes a rotational displacement (specifically, a rotational movement around the axis CL) will be described.

When an alternating current of a predetermined frequency is applied to the transmitter coil 30, a magnetic field is generated that passes through the first receiver coil 410 and the second receiver coil 420. Since the magnetic field changes due to the AC current, an induced electromotive force is generated in the first receiver coil 410 and the second receiver coil 420 due to electromagnetic induction.

At that time, eddy currents are generated in the teeth 11 of the target 10 located facing the transmitter coil 30, the first receiver coil 410, and the second receiver coil 420, and the magnetic field is generated due to the eddy currents. Therefore, the magnetic field passing through the first receiver coil 410 and the second receiver coil 420 at the location facing the teeth 11 of the target 10 is cancelled out by the magnetic field caused by the eddy current.

As the target 10 rotates and displaces, the locations of the first receiver coil 410 and the second receiver coil 420 that face the teeth 11 and the opening 12 of the target 10 change. Therefore, the first voltage value V1 generated in the first receiver coil 410 and the second voltage value V2 generated in the second receiver coil 420 change periodically in accordance with the rotational displacement of the target 10. In the present embodiment, for example, as shown in FIG. 7, the first voltage value V1 generated in the first receiver coil 410 is a sine wave, and the second voltage value V2 generated in the second receiver coil 420 is a cosine wave with the same wavelength as the first voltage value V1.

Here, for comparison with the position detection device of the above-mentioned first embodiment, two comparative examples of the position detection devices will be described.

### First Comparative Example:

First, a position detection device of a first comparative example will be described.

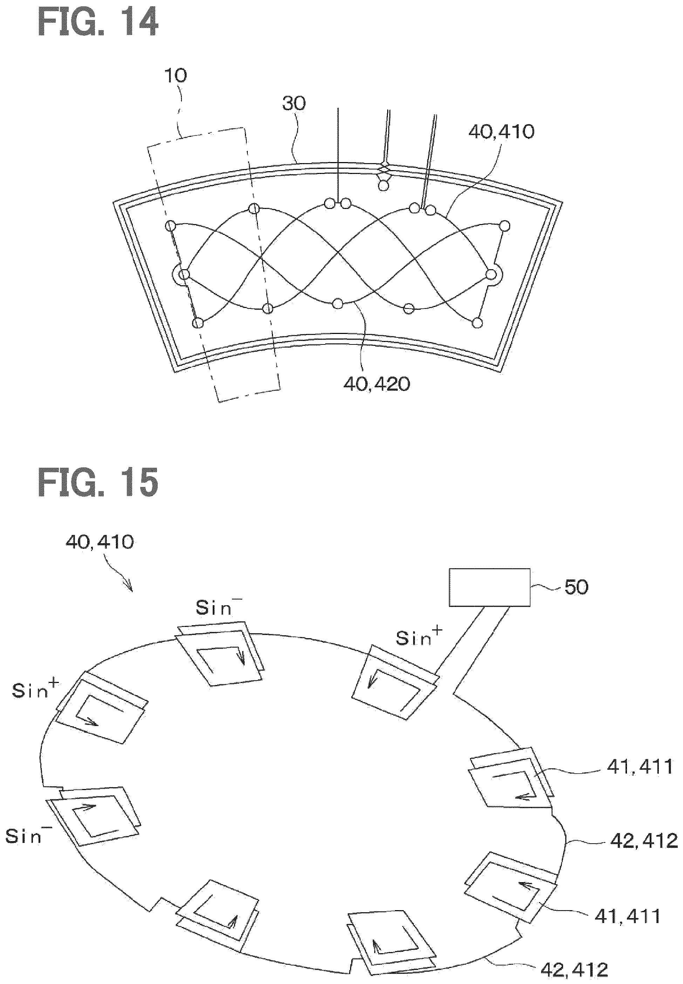

As shown in FIG. 14, in the receiver coils 40 provided in the position detection device of the first comparative example, the first receiver coil 410 has a sine wave shape, and the second receiver coil 420 has a cosine wave shape. The first receiver coil 410 is wired in one continuous line, and the second receiver coil 420 is also wired in one continuous line. Also in the first comparative example, in accordance with the displacement of the mechanical angle of the target 10, the first receiver coil 410 outputs a sine wave voltage signal, and the second receiver coil 420 outputs a cosine wave voltage signal.

However, the amplitude of the output voltage of each of the first receiver coil 410 and the second receiver coil 420 in the first comparative example is much smaller than the amplitude of the output voltage of each of the first receiver coil 410 and the second receiver coil 420 in the first embodiment.

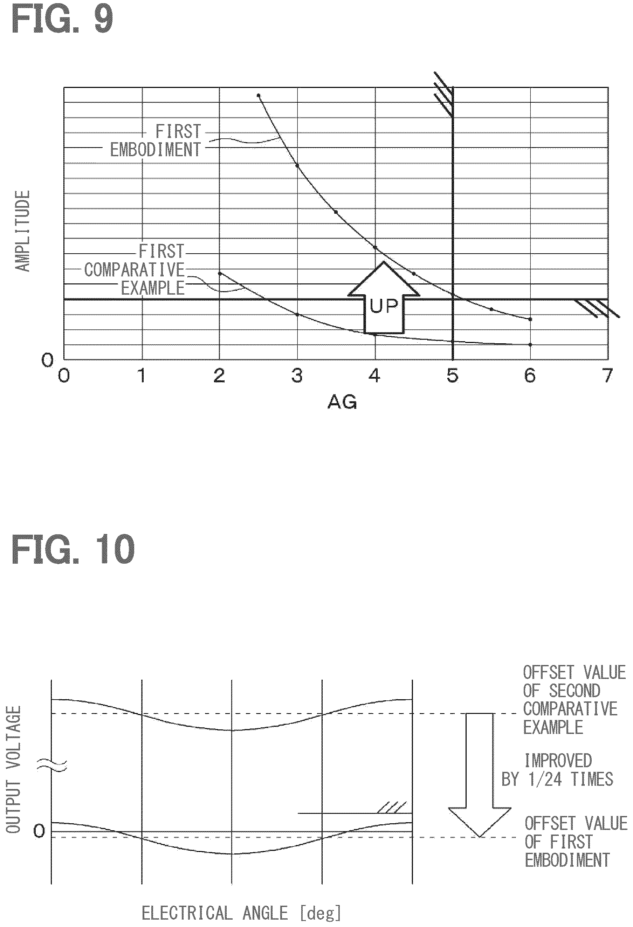

FIG. 9 is a graph comparing the amplitude of the output voltage of the receiver coil 40 of the first embodiment with the amplitude of the output voltage of the receiver coil 40 of the first comparative example. The horizontal axis of FIG. 9 indicates a gap between the substrate 20 and the target 10, and the vertical axis indicates the average amplitude.

As shown in FIG. 9, at any gap between 2 and 6 mm, the amplitude of the output voltage of the receiver coil 40 of the first embodiment is larger than the amplitude of the output voltage of the receiver coil 40 of the first comparative example. This phenomenon is due to the following two reasons.

The first reason is that when the receiver coil 40 has a sine wave shape and a cosine wave shape as in the first comparative example, the space factor of the wiring of the receiver coil 40 with respect to the substrate 20 becomes small. In contrast, in the first embodiment, the receiver coil 40 has a shape including a plurality of spiral portions 41, so that it is possible to increase the space factor of the wiring of the receiver coil 40 relative to the substrate 20.

The second reason is that when the receiver coil 40 is shaped like a sine wave or cosine wave as in the first comparative example, if wiring of the same shape is provided on each layer of the substrate 20, the number of vias for connecting the wiring of each phase will be large. By arranging the wiring of each layer so as to avoid the vias, the space factor of the wiring of the receiver coil 40 relative to the substrate 20 is reduced. In contrast, in the first embodiment, the receiver coil 40 has a shape including a plurality of spiral portions 41. Therefore, when wiring of the same shape is provided on each layer of the substrate 20, vias for connecting the wiring of each phase need to be disposed only in the center and outer periphery of the spiral portion 41. Therefore, in the first embodiment, it is possible to prevent the space factor of the wiring of the receiver coil 40 on the substrate 20 from being reduced by the vias.

For the above reasons, the position detection device of the first embodiment can increase the amplitude of the output voltage of the receiver coil 40 by increasing the space factor of the wiring of the receiver coil 40 on the substrate 20, compared to the position detection device of the first comparative example.

### Second Comparative Example:

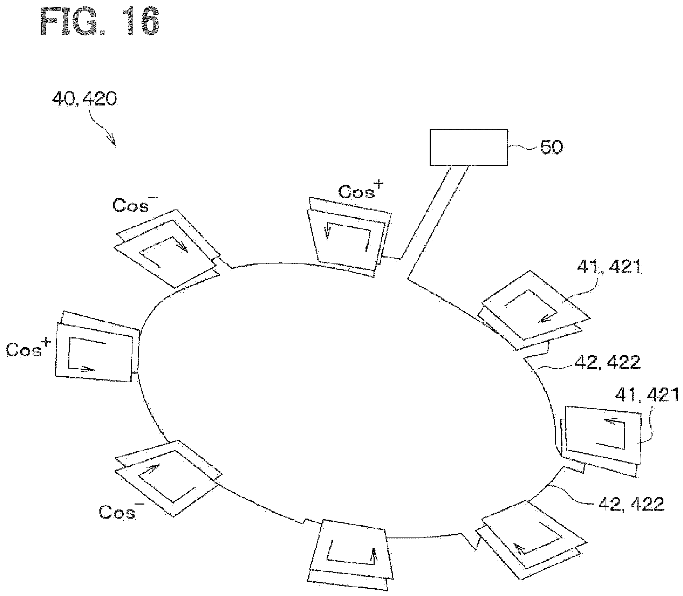

Next, a position detection device of a second comparative example will be described. FIG. 15 shows the first receiver coil 410 provided in the position detection device of the second comparative example, and FIG. 16 shows the second receiver coil 420 provided in the position detection device of the second comparative example. In the second comparative example, the first receiver coil 410 and the second receiver coil 420 are also arranged on the same substrate 20 such that the first spiral portion 411 and the second spiral portion 421 are alternately arranged in the circumferential direction.

As shown in FIG. 15, the first receiver coil 410 of the second comparative example has a plurality of first spiral portions 411 and a first connecting wire 412 that electrically connects the plurality of first spiral portions 411 to each other, but does not have the first parallel wire 413 described in the first embodiment. Also, as shown in FIG. 16, the second receiver coil 420 of the second comparative example has a plurality of second spiral portions 421 and a second connecting wire 422 that electrically connects the plurality of second spiral portions 421 to each other, but does not have the second parallel wire 423 described in the first embodiment.

In the second comparative example as well, when the alternating current is applied to the transmitter coil 30, the induced current is generated in the spiral portion 41 and the connecting wire 42 at a portion of the receiver coil 40 corresponding to the opening 12 of the target 10. At that time, the induced current generated in the connecting wire 42 becomes a factor that offsets the output voltage of the receiver coil 40 , which changes according to the amount of displacement of the target 10. In the second comparative example, when the offset value of the output voltage of the receiver coil 40 falls outside the signal adjustment range of the signal processing unit 50 (e.g., an IC), the offset correction, the gain correction, etc. are not performed accurately, resulting in a problem of deteriorating position detection accuracy.

FIG. 10 is a graph comparing the output voltage of the receiver coil 40 of the first embodiment and the output voltage of the receiver coil 40 of the first comparative example.

As shown in FIG. 10, the offset value of the output voltage of the receiver coil 40 in the first embodiment is improved by 1/24 times compared to the offset value of the output voltage of the receiver coil 40 in the first comparative example. As a result, the position detection device of the first embodiment can set the offset value of the output voltage of the receiver coil 40 within the signal adjustment range of the signal processing unit 50 (e.g., IC). Therefore, in the position detection device of the first embodiment, the signal adjustment function (for example, offset correction and gain correction) by the signal processing unit 50 operates normally, so that the accuracy of position detection can be improved.

As described above, the position detection device of the first embodiment has the following advantages over the position detection devices of the first and second comparative examples.
(1) In the position detection device of the first embodiment, the receiver coil 40 has the plurality of spiral portions 41, the connecting wire 42 that electrically connects the plurality of spiral portions 41 to each other, and the parallel wire 43 that runs parallel to the connecting wire 42.

According to this configuration, when an alternating current is applied to the transmitter coil 30, at least a part of the magnetic field generated by the current flowing through the connecting wire 42 and at least a part of the magnetic field generated by the current flowing through the parallel wire 43 cancel each other out. Therefore, the waveform of the output voltage of the receiver coil 40, which changes in accordance with the amount of displacement of the target 10, is prevented from being offset from the ideal waveform. Therefore, this position detection device prevents the output voltage of the receiver coil 40 from going outside the adjustment range of the signal processing unit 50, thereby improving detection accuracy.

Furthermore, in this position detection device, the receiver coil 40 has a plurality of spiral portions 41, so that the space factor of the wiring of the receiver coil 40 relative to the substrate 20 can be increased. Therefore, the amplitude of the output voltage of the receiver coil 40 can be increased, and the detection accuracy can be improved.

(2) In the first embodiment, the connecting wire 42 and the parallel wire 43 are arranged such that, at a given instantaneous value of the alternating current applied to the transmitter coil 30, the direction of the current flowing through a given portion of the connecting wire 42 is opposite to the direction of the current flowing through a given portion of the parallel wire 43 adjacent to the given portion of the connecting wire 42.

According to this configuration, when an alternating current is applied to the transmitter coil 30, at least a part of the magnetic field generated by the current flowing through the connecting wire 42 and at least a part of the magnetic field generated by the current flowing through the parallel wire 43 cancel each other out.

(3) In the first embodiment, the connecting wire 42 and the parallel wire 43 are disposed adjacent to each other. Specifically, adjacent arrangement means that the connecting wire 42 and the parallel wire 43 are arranged at a distance such that at least a part of the magnetic field generated by the current flowing in the connecting wire 42 due to the alternating current applied to the transmitter coil 30 and at least a part of the magnetic field generated by the current flowing in the parallel wire 43 cancel each other out.

This suppresses the generation of induced current from the connecting wire 42, making it possible to prevent the average value of the output voltage of the receiver coil 40 from being significantly offset from 0 mV.

(4) In the first embodiment, the plurality of connecting wires 42 are provided at multiple locations between the plurality of spiral portions 41. The parallel wires 43 are provided corresponding to at least some or all of the connecting wires 42 at a plurality of locations.

This cancels out the magnetic field generated by current flowing through at least some or all of the connecting wires 42 at a plurality of locations, and suppresses the generation of induced current from the connecting wires 42, thereby preventing the average value of the output voltage of the receiver coil 40 from being significantly offset from 0 mV.

(5) In the first embodiment, the connecting wires 42 and the parallel wires 43 are provided on different layers of the substrate 20.
This allows the connecting wires 42 and the parallel wires 43 to be disposed adjacent to each other on different layers of the substrate 20.

(6) In the first embodiment, the receiver coil 40 includes the first receiver coil 410 and the second receiver coil 420. The first receiver coil 410 has one first spiral portion 411, the other first spiral portion 411, the first connecting wire 412 electrically connecting the one first spiral portion 411 to the other first spiral portion 411, and the first parallel wire 413 running parallel to the first connecting wire 412. The one first spiral portion 411 is, for example, a Sin+ coil, and the other first spiral portion 411 is, for example, a Sin-coil. The second receiver coil 420 has one second spiral portion 421, the other second spiral portion 421, the second connecting wire 422 electrically connecting the one second spiral portion 421 to the other second spiral portion 421, and the second parallel wire 423 running parallel to the second connecting wire 422. The one second spiral portion 421 is, for example, a Cos+ coil, and the other second spiral portion 421 is, for example, a Cos- coil. Then, the one first spiral portion (e.g., a Sin+ coil), the one second spiral portion (e.g., a Cos+ coil), the other first spiral portion (e.g., a Sin- coil) and the other second spiral portion (e.g., a Cos- coil) are arranged in this order.

This illustrates a specific configuration of the first receiver coil 410 and the second receiver coil 420 included in the receiver coil 40.

(7) In the first embodiment, the distance between the center of one first spiral portion 411 and the center of the other first spiral portion 411 arranged on either side of a predetermined second spiral portion 421 is set so that the phases of the waveforms of the output voltage corresponding to the displacement of the target 10 differ by 180 degrees in electrical angle. In addition, the distance between the center of one second spiral portion 421 and the center of the other second spiral portion 421 arranged on either side of a predetermined first spiral portion 411 is set so that the phases of the output voltages differ by 180 degrees in electrical angle.

According to this configuration, one of the output voltages of the first receiver coil 410 and the second receiver coil 420 in response to the displacement of the target 10 can be made to have a sine wave shape, and the other can be made to have a sine wave shape that is out of phase with the sine wave shape (i.e., a cosine wave shape).

### Second Embodiment:

A second embodiment will be described. Since the second embodiment is a modification of the first embodiment in terms of the configuration, only the differences from the first embodiment will be described.

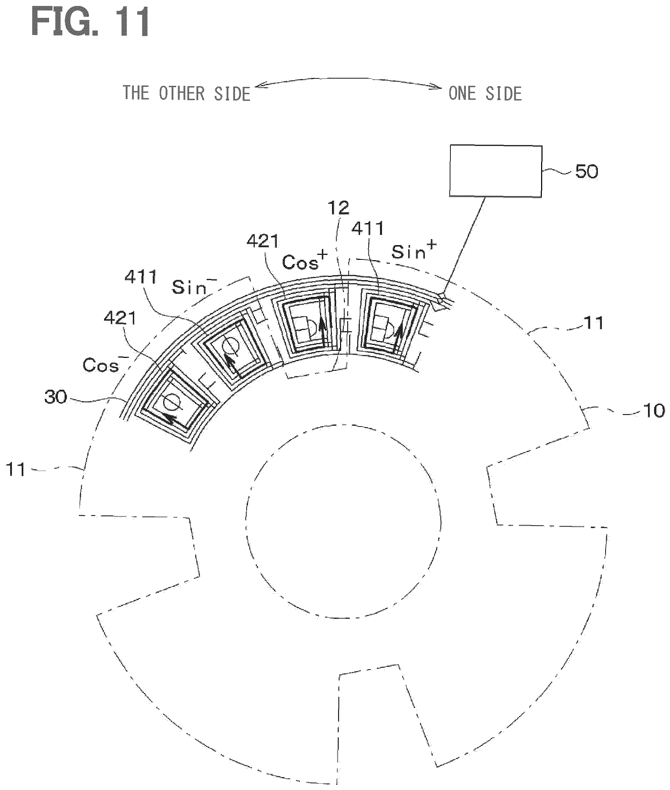

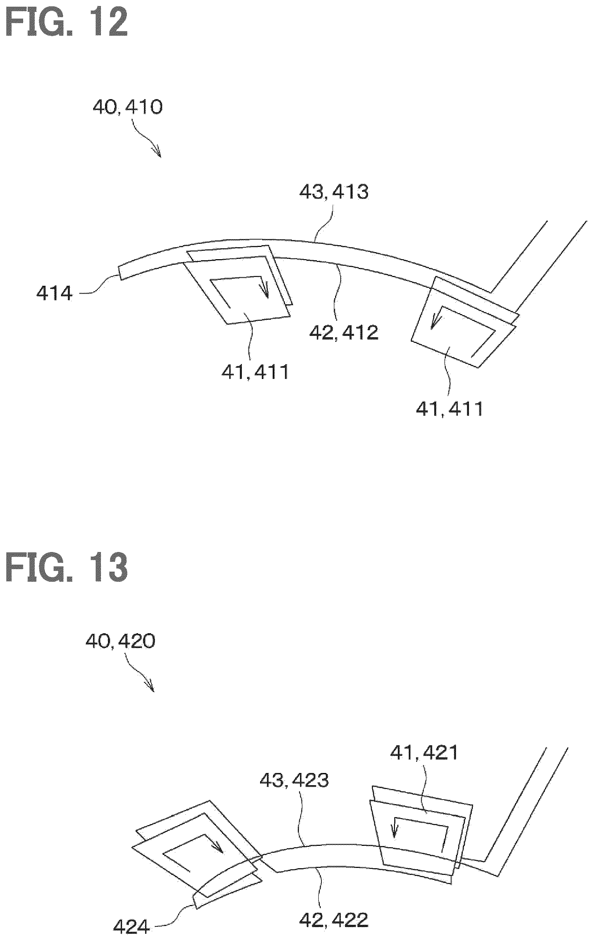

As shown in FIGS. 11 and 12, in the position detection device of the second embodiment, the first receiver coil 410 has one first spiral portion 411, the other first spiral portion 411, a first connecting wire 412, and a first parallel wire 413. The first connecting wire 412 electrically connects one first spiral portion 411 to the other first spiral portion 411. The first parallel wire 413 is electrically connected to the first spiral portion 411 and the first connecting wire 412 and extends parallel to the first connecting wire 412.

As shown in FIGS. 11 and 13, the second receiver coil 420 has one second spiral portion 421, the other second spiral portion 421, a second connecting wire 422, and a second parallel wire 423. The second connecting wire 422 electrically connects one second spiral portion 421 to the other second spiral portion 421. The second parallel wire 423 is electrically connected to the second spiral portion 421 and the second connecting wire 422 and extends parallel to the second connecting wire 422. As shown in FIG. 11, the first spiral portions 411 and the second spiral portions 421 are arranged alternately.

Also in the second embodiment, when an alternating current is applied to the transmitter coil 30, at least a part of the magnetic field generated by the current flowing through the connecting wire 42 and at least a part of the magnetic field generated by the current flowing through the parallel wire 43 cancel each other out. Therefore, the waveform of the output voltage of the receiver coil 40, which changes in accordance with the amount of displacement of the target 10, is prevented from being offset from the ideal waveform. Therefore, the position detection device of the second embodiment can achieve the same effects as the first embodiment.

### Other Embodiments:

(1) In each of the above embodiments, each of the receiver coils 40 is provided in three layers of the substrate 20. However, the present disclosure is not limited to this configuration. For example, the receiver coil 40 may be provided on one layer of the substrate 20, or on two or more layers of the substrate 20. Therefore, each spiral portion 41 may be provided in one layer of the substrate 20, or in three or more layers.
(2) In each of the above embodiments, the parallel wires 43 and the connecting wires 42 are provided in different layers of the substrate 20 and overlap each other in the thickness direction of the substrate 20. However, the present disclosure is not limited to this configuration. For example, the parallel wire 43 and the connecting wire 42 may be arranged adjacent to each other on the same layer of the substrate 20 at a distance such that at least a part of the magnetic field generated by the current flowing in the connecting wire 42 and at least a part of the magnetic field generated by the current flowing in the parallel wire 43 cancel each other out.
(3) In each of the above embodiments, the target 10 as the object to be detected is described as being subject to rotational displacement. However, the present disclosure is not limited to this configuration. For example, the target 10 may displace in a linear or curvilinear manner.
(4) In each of the above embodiments, the characteristic value of the receiver coil 40 is a voltage value. However, the present disclosure is not limited to this configuration. For example, the characteristic value of the receiver coil 40 may be a current value or an inductance.

The present disclosure is not limited to the above-described embodiments, and can be appropriately modified. The above-described embodiments and a part thereof are not irrelevant to each other, and can be appropriately combined with each other unless the combination is obviously impossible. The constituent element(s) of each of the above embodiments is/are not necessarily essential unless it is specifically stated that the constituent element(s) is/are essential in the above embodiment, or unless the constituent element(s) is/are obviously essential in principle. A quantity, a value, an amount, a range, or the like referred to in the description of the embodiments described above is not necessarily limited to such a specific value, amount, range or the like unless it is specifically described as essential or understood as being essential in principle. Further, in each of the above-mentioned embodiments, when referring to the shape, positional relationship, and the like of a component and the like, the component is not limited to the shape, positional relationship, and the like, except for the case where the component is specifically specified, the case where the component is fundamentally limited to a specific shape, positional relationship, and the like.

The control unit and the method thereof described in the present disclosure are realized by a dedicated computer provided by configuring a processor and a memory programmed to execute one or more functions embodied by a computer program. May be done. Alternatively, the controller and the method described in the present disclosure may be implemented by a special purpose computer configured as a processor with one or more special purpose hardware logic circuits. Alternatively, the controller and the method described in the present disclosure may be implemented by one or more special purpose computer, which is configured as a combination of a processor and a memory, which are programmed to perform one or more functions, and a processor which is configured with one or more hardware logic circuits. The computer programs may be stored, as instructions to be executed by a computer, in a tangible non-transitory computer-readable medium. The memory is a non-transitory tangible storage medium.

### Various Aspects of Present Disclosure:

The present disclosure described above can be understood from the following features, for example.

### First aspect:

A position detection device for detecting a position of a displaceable detection object (10) includes
a substrate (20) disposed facing the detection object,
a transmitter coil (30) extending in a plane direction of the substrate, and
a receiver coil (40) in which wiring is formed in a spiral shape and aligned in a direction of displacement of the detection object.

The receiver coil (40) has a plurality of spiral portions (41) that are inductively coupled by electromagnetic induction caused by current passing through the transmitter coil, a connecting wire (42) that electrically connect the plurality of spiral portions to each other, and a parallel wire (43) that is electrically connected to the spiral portion and the connecting wire and extends parallel to the connecting wire.

### Second aspect:

In the position detection device described in the first aspect, the connecting wire and the parallel wire are arranged so that, at a predetermined instantaneous value of the alternating current applied to the transmitter coil, a direction of current flowing through a predetermined portion of the connecting wire is opposite to a direction of current flowing through a predetermined portion of the parallel wire adjacent to the predetermined portion of the connecting wire.

### Third aspect:

In the position detection device described in the first aspect, the connecting wire and the parallel wire are arranged adjacent to each other at a distance such that at least a part of the magnetic field generated by the current flowing in the connecting wire due to the alternating current applied to the transmitter coil and at least a part of the magnetic field generated by the current flowing in the parallel wire cancel each other out.

### Fourth aspect:

In the position detection device described in the first aspect, the connecting wire and the parallel wire are arranged so that, at a predetermined instantaneous value of the alternating current applied to the transmitter coil, a direction of current flowing through a predetermined portion of the connecting wire is opposite to a direction of current flowing through a predetermined portion of the parallel wire adjacent to the predetermined portion of the connecting wire.

The connecting wire and the parallel wire are arranged adjacent to each other at a distance such that at least a part of the magnetic field generated by the current flowing in the connecting wire due to the alternating current applied to the transmitter coil and at least a part of the magnetic field generated by the current flowing in the parallel wire cancel each other out.

### Fifth aspect:

In the position detection device according to any one of the first to fourth aspects, the connecting wires are provided at a plurality of locations between the plurality of spiral portions.

The parallel wires are provided corresponding to at least some or all of the connecting wires at a plurality of locations.

### Sixth aspect:

In the position detection device according to any one of the first to fifth aspects, the connecting wire and the parallel wire are provided on different layers of the substrate.

### Seventh aspect:

In the position detection device according to any one of the first to fifth aspects, the connecting wire and the parallel wire are provided in the same layer of the substrate.

### Eighth aspect:

In the position detection device described in any one of the first to seventh aspects, the receiver coil includes
a first receiver coil (410) having one first spiral portion (411) through which current flows counterclockwise at a predetermined instantaneous value of an alternating current applied to the transmitter coil, the other first spiral portion through which current flows clockwise at the predetermined instantaneous value, a first connecting wire (412) electrically connecting the one first spiral portion and the other first spiral portion, and a first parallel wire (413) electrically connected to the one first spiral portion, the other first spiral portion, and the first connecting wire and extending parallel to the first connecting wire; and
a second receiver coil (420) including one second spiral portion (421) through which current flows counterclockwise at another instantaneous value of the alternating current applied to the transmitter coil, the other second spiral portion through which current flows clockwise at the other instantaneous value, a second connecting wire (422) electrically connecting the one second spiral portion and the other second spiral portion, and a second parallel wire (423) electrically connected to the one second spiral portion, the other second spiral portion, and the second connecting wire and extending parallel to the second connecting line.

The one first spiral portion, the one second spiral portion, the other first spiral portion, and the other second spiral portion are arranged in this order.

### Ninth aspect:

In the position detection device described in the eighth aspect, the one first spiral portion and the other first spiral portion, which are arranged with the one second spiral portion or the other second spiral portion sandwiched therebetween, have a distance between a center of the one first spiral portion and a center of the other first spiral portion set so that a phase of a characteristic value with respect to a displacement amount of the detection object differs by 180 degrees in electrical angle.

The one second spiral portion and the other second spiral portion, which are arranged with the one first spiral portion or the other first spiral portion sandwiched therebetween, have a distance between a center of the one second spiral portion and a center of the other second spiral portion set so that a phase of a characteristic value with respect to a displacement amount of the detection object differs by 180 degrees in electrical angle.

## Claims

1. A position detection device for detecting a position of a displaceable detection object (10), comprising:
a substrate (20) disposed facing the detection object;
a transmitter coil (30) extending in a plane direction of the substrate; and
a receiver coil (40) in which wiring is formed in a spiral shape and aligned in a direction of displacement of the detection object, wherein
the receiver coil (40) has a plurality of spiral portions (41) that are inductively coupled by electromagnetic induction caused by current passing through the transmitter coil, a connecting wire (42) that electrically connect the plurality of spiral portions to each other, and a parallel wire (43) that is electrically connected to the spiral portion and the connecting wire and extends parallel to the connecting wire.

2. The position detection device according to claim 1, wherein
the connecting wire and the parallel wire are arranged so that, at a predetermined instantaneous value of the alternating current applied to the transmitter coil, a direction of current flowing through a predetermined portion of the connecting wire is opposite to a direction of current flowing through a predetermined portion of the parallel wire adjacent to the predetermined portion of the connecting wire.

3. The position detection device according to claim 1, wherein
the connecting wire and the parallel wire are arranged adjacent to each other at a distance such that at least a part of the magnetic field generated by the current flowing in the connecting wire due to the alternating current applied to the transmitter coil and at least a part of the magnetic field generated by the current flowing in the parallel wire cancel each other out.

4. The position detection device according to claim 1, wherein
the connecting wire and the parallel wire are arranged so that, at a predetermined instantaneous value of the alternating current applied to the transmitter coil, a direction of current flowing through a predetermined portion of the connecting wire is opposite to a direction of current flowing through a predetermined portion of the parallel wire adjacent to the predetermined portion of the connecting wire, and
the connecting wire and the parallel wire are arranged adjacent to each other at a distance such that at least a part of the magnetic field generated by the current flowing in the connecting wire due to the alternating current applied to the transmitter coil and at least a part of the magnetic field generated by the current flowing in the parallel wire cancel each other out.

5. The position detection device according to any one of claims 1 to 4, wherein
the connecting wires are provided at a plurality of locations between the plurality of spiral portions, and
the parallel wires are provided corresponding to at least some or all of the connecting wires at a plurality of locations.

6. The position detection device according to any one of claims 1 to 4, wherein
the connecting wire and the parallel wire are provided on different layers of the substrate.

7. The position detection device according to any one of claims 1 to 4, wherein
the connecting wire and the parallel wire are provided on the same layer of the substrate.

8. The position detection device according to any one of claims 1 to 4, wherein
the receiver coil includes
a first receiver coil (410) having one first spiral portion (411) through which current flows counterclockwise at a predetermined instantaneous value of an alternating current applied to the transmitter coil, the other first spiral portion through which current flows clockwise at the predetermined instantaneous value, a first connecting wire (412) electrically connecting the one first spiral portion and the other first spiral portion, and a first parallel wire (413) electrically connected to the one first spiral portion, the other first spiral portion, and the first connecting wire and extending parallel to the first connecting wire, and
a second receiver coil (420) including one second spiral portion (421) through which current flows counterclockwise at another instantaneous value of the alternating current applied to the transmitter coil, the other second spiral portion through which current flows clockwise at the other instantaneous value, a second connecting wire (422) electrically connecting the one second spiral portion and the other second spiral portion, and a second parallel wire (423) electrically connected to the one second spiral portion, the other second spiral portion, and the second connecting wire and extending parallel to the second connecting line, and
the one first spiral portion, the one second spiral portion, the other first spiral portion, and the other second spiral portion are arranged in this order.

9. The position detection device according to claim 8, wherein
the one first spiral portion and the other first spiral portion, which are arranged with the one second spiral portion or the other second spiral portion sandwiched therebetween, have a distance between a center of the one first spiral portion and a center of the other first spiral portion set so that a phase of a characteristic value with respect to a displacement amount of the detection object differs by 180 degrees in electrical angle, and
the one second spiral portion and the other second spiral portion, which are arranged with the one first spiral portion or the other first spiral portion sandwiched therebetween, have a distance between a center of the one second spiral portion and a center of the other second spiral portion set so that a phase of a characteristic value with respect to a displacement amount of the detection object differs by 180 degrees in electrical angle.
